# EUROPEAN PATENT SPECIFICATION

(11) **EP 2 131 043 B1**
(45) Date of publication and mention of the grant of the patent: **14.09.2011**
(21) Application number: 08721868.1
(22) Date of filing: 12.03.2008
(51) Int. Cl.: B23B 31/26, B23B 31/28, B23B 31/30, B30B 1/26, F04B 9/04, F15B 7/00

(54) **Actuator, unclamp device and processing device with actuator**
Stellglied, Freigabevorrichtung sowie Bearbeitungsvorrichtung mit Stellglied
Actionneur, dispositif de desserrage et dispositif de traitement avec l'actionneur

(30) Priority: 19.03.2007 JP 2007070725
(43) Date of publication of application: 09.12.2009
(73) Proprietor: Pascal Engineering Corporation, Itami-shi Hyogo 664-8502 (JP)
(72) Inventor: KITAURA, Ichiro, Itami-shi Hyogo 664-8502 (JP)
(74) Representative: Prüfer & Partner GbR European Patent Attorneys
(86) International application number: PCT/JP2008/054452
(87) International publication number: WO 2008/126579

(56) References cited:
- EP-A1- 0 636 788
- JP-A- 4 067 941
- JP-A- 10 141 303
- JP-A- 47 016 875
- JP-A- 2000 329 103
- JP-A- 2004 019 544
- JP-U- 05 061 466
- US-A- 2 675 759
- US-A- 3 977 192
- US-A- 5 322 418
- US-A- 5 943 860

## Description

### TECHNICAL FIELD

The present invention relates to an actuator, an unclamp apparatus having the actuator, and a machining apparatus, as per the preamble of claim 1, claim 6 and claim 7 respectively.

### BACKGROUND ART

Conventionally, machining apparatuses such as punching machines are equipped with actuators capable of outputting a large driving force for a brief moment.

Such an actuator includes a hydraulic circuit including, for example, a hydraulic pump connected to an oil tank and driven by a motor, a servovalve connected to a discharge-side pipe of the hydraulic pump, a check valve, a relief valve, and an accumulator. Then, the above-noted servovalve is connected to a hydraulic cylinder having a piston rod performing a punching process by striking, and the hydraulic pressure discharged by the hydraulic pump is sent to an upper chamber of the hydraulic cylinder to move the piston rod down. The piston rod then provides a punching process.
Patent Document 1: Japanese Patent Laying-Open No. 2000-312929

US 3 977 192 A and US 2 675 759 A describe a hydraulic system to output a force, which show a piston based force generation, wherein a liquid (oil) is delivered through a bore in the piston. This delivery of liquid is controlled by a valve. The piston therein permanently separates a reservoir of liquid and a pressurization chamber.

EP 0 636 788 A1 describes a volumetric piston pump, which builds up pressure by delivering liquid into a pressurization chamber by way of a valve system. The reservoir chamber and the pressurization chamber therein are always separated by at least one of the valves provided.

JP 10 141303 A describes a pressure loss compensation device having a pressurization chamber and a reservoir chamber, which are provided in different elements.

JP 2000 329103 A describes a cam synchronizing mechanism, which includes an operation chamber, a plunger, and a minor diameter hole communicating with the operation chamber. The plunger here is provided in the minor diameter hole and inserted in the operation chamber.

### DISCLOSURE OF THE INVENTION

### PROBLEMS TO BE SOLVED BY THE INVENTION

In the actuator configured in the foregoing manner e.g., according to Patent Document 1, however, the hydraulic pump has to be always driven, and in addition, unnecessary pressure has to be released from the relieve valve, resulting in much useless energy and poor driving efficiency.

The present invention is made in view of the foregoing problem, and an object of the present invention is to provide an actuator capable of outputting a large driving force for a short time with improved energy efficiency, an unclamp apparatus having this actuator, and a machining apparatus.

This object is achieved by a device according to claim 1. Further advantageous developments are subject to the dependent claims.

### MEANS FOR SOLVING THE PROBLEMS

An actuator in accordance with the present invention includes the features of claim 1.

Preferably, the actuator further includes a connection portion connected with the accommodation chamber and the output portion. Preferably, the actuating medium is a liquid actuating medium, and the actuator further includes a separation mechanism connected to an output mechanism to be able to separate gas in the actuating medium. Preferably, the actuator further includes an auxiliary power source capable of applying auxiliary power to the cam member. Preferably, the actuator further includes a valve supplying outside air into the accommodation chamber and ejecting gas in the accommodation chamber.

An unclamp apparatus in accordance with the present invention includes the aforementioned actuator. A machining apparatus in accordance with the present invention includes the aforementioned actuator.

### EFFECTS OF THE INVENTION

According to an actuator, an unclamp apparatus and a machining apparatus in accordance with the present invention, a large driving force can be output for a short time, and in addition, the driving efficiency can be improved.

### BRIEF DESCRIPTION OF THE DRAWINGS

Fig. 1 is a cross-sectional view schematically showing a structure of a punching machine having an actuator in accordance with a first embodiment.
Fig. 2 is a plan view of a cam member.
Fig. 3 is a side view, partially in section, showing a first modification of the actuator in accordance with the present embodiment.
Fig. 4 is a schematic diagram showing a second modification of the actuator in accordance with the present embodiment.
Fig. 5 is a cross-sectional view showing an example in which the actuator in accordance with the present embodiment is applied to an unclamp apparatus.
Fig. 6 is a cross-sectional view showing an actuator supplying a driving force for an unclamp operation to the unclamp apparatus shown in Fig. 5.

### DESCRIPTION OF THE REFERENCE SIGNS

10 power source, 11 auxiliary power mechanism, 12 rotation shaft, 13 hydraulic pump, 14 punch cylinder, 15 cam member, 16, 17 cam portion, 18 roller member, 19 piston rod, 20 cylinder portion, 20a accommodation chamber, 21 pressurization chamber, 24 valve, 26 reservoir chamber, 27 connection tube, 30 punch rod, 40 gas-liquid separation tank, 50 power transmission mechanism, 100 actuator, 200 punching machine, 300 unclamp apparatus.

### BEST MODES FOR CARRYING OUT THE INVENTION

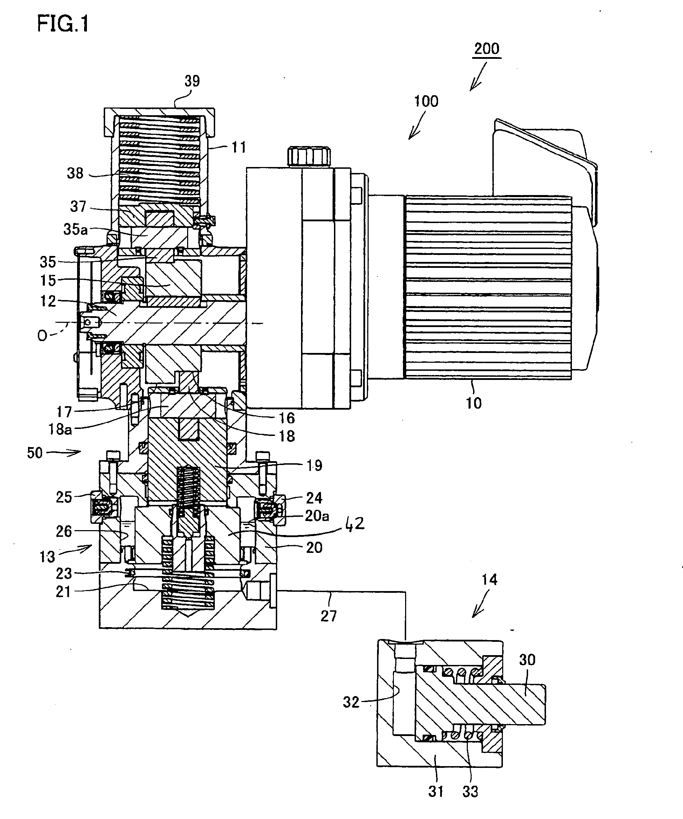

Using Fig. 1 to Fig. 6, an actuator and a machining apparatus in accordance with the present embodiment will be described. It is noted that the same structures and corresponding structures are denoted with the same reference characters and the description thereof may sometimes be omitted.

Fig. 1 is a cross-sectional view schematically showing a structure of a punching machine 200 having an actuator 100 in accordance with a first embodiment.

As shown in Fig. 1, punching machine (machining apparatus) 200 includes actuator 100 and, for example, a work holding mechanism holding a work. Actuator 100 includes a power source 10 having a motor, a clutch mechanism, and a speed reduction mechanism, a punch cylinder 14 as an output mechanism, and a power transmission mechanism 50 transmitting power from power source 10 to punch cylinder 14 through oil (actuating medium).

Punch cylinder 14 includes a punch rod (drive portion) 30 driven by the pressure of oil supplied from power transmission mechanism 50 to perform punch processing on a work, and a cylinder portion 31 slidably accommodating punch rod 30 and having an oil accommodation chamber 32 defined therein for accommodating oil from power transmission mechanism 50.

Furthermore, this punch cylinder 14 further includes an elastic member 33 biasing punch rod 30, and oil supplied into oil accommodation chamber 32 causes punch rod 30 to be pushed toward a work against a biasing force from elastic member 33.

Power transmission mechanism 50 includes a rotation shaft (drive shaft) 12 capable of being rotatably driving by power source 10, a cam member 15 provided for rotation shaft 12, and a hydraulic pump 13 following the motion of cam member 15 for pressurizing and discharging oil. Then, hydraulic pump 13 includes a piston rod (following member) 19 following the motion of cam member 15, and a cylinder portion 20 slidably supporting piston rod 19.

Cylinder portion 20 has an accommodation chamber 20a defined therein for accommodating oil and has its capacity varied by piston rod 19 sliding. Here, accommodation chamber 20a includes a reservoir chamber 26 having a diameter larger than the diameter of piston rod 19, and a pressurization chamber 21 connected to a lower end portion of reservoir chamber 26 to have piston rod 19 fitted therein and having oil pressurized by piston rod 19.

Here, in a previous state in which piston rod 19 is fitted in pressurization chamber 21, a gap is formed between an inner wall surface of pressurization chamber 21, an inner wall surface of reservoir chamber 26, and piston rod 19, so that reservoir chamber 26 is in communication with pressurization chamber 21. Then, since reservoir chamber 26 is positioned above pressurization chamber 21, gas such as the air coming into pressurization chamber 21 is displaced upward to enter reservoir chamber 26. In other words, the gas in pressurization chamber 21 is ejected into reservoir chamber 26, and the gas such as the air ejected into reservoir chamber 26 is accumulated on the side of the upper end portion of reservoir chamber 26. In this manner, the air in pressurization chamber 21 is separated, and pressurization chamber 21 is filled with oil. Here, an annular seal member 23 is provided on an inner circumferential surface of pressurization chamber 21. Then, a lower end portion (42) of piston rod 19 is displaced toward pressurization chamber 21 from the state in which it is kept apart from pressurization chamber 21 as shown in Fig. 1, and upon reaching seal member 23, pressurization chamber 21 and reservoir chamber 26 are separated from each other. Then, when piston rod 19 is further displaced downward to enter pressurization chamber 21, pressurization of oil in pressurization chamber 21 is started. Here, as described above, the entrance of gas such as the air into pressurization chamber 21 is prevented, so that piston rod 19 can pressurize oil well.

Cylinder portion 20 is provided with valves 24, 25 so that a prescribed pressure can be kept in cylinder portion 20 by ejecting the gas in cylinder portion 20 to the outside when the internal pressure of cylinder portion 20 is a prescribed pressure or higher or by supplying the outside air to the inside when the interior of cylinder portion 20 reaches a prescribed pressure or lower. It is noted that valves 24, 25 are positioned above the level of oil.

A roller member 18 is provided at an end portion of piston rod 19 on the cam member 15 side. A shaft portion 18a rotatably supporting roller member 18 is inserted in a hole portion formed on the upper end portion side of piston rod 19. Then, roller member 18 is in contact with an outer circumferential surface of cam member 15. Therefore, rotation of cam member 15 allows piston rod 19 to slide in accordance with the motion of cam member 15 via roller member 18.

Piston rod 19 slides such that the accommodating capacity of accommodating oil in cylinder portion 20 is reduced, whereby oil in cylinder portion 20 is pressurized.

Then, a connection tube 27 connected with cylinder portion 20 and cylinder portion 31 is provided so that oil pressurized by piston rod 19 is supplied into oil accommodating chamber 32 of cylinder portion 31 through connection tube 27. In this manner, punch rod 30 is driven by the power transmitted to oil by piston rod 19. In this way, in this actuator 100, the supply amount of oil supplied to punch cylinder 14 can be controlled according to the shape of cam member 15.

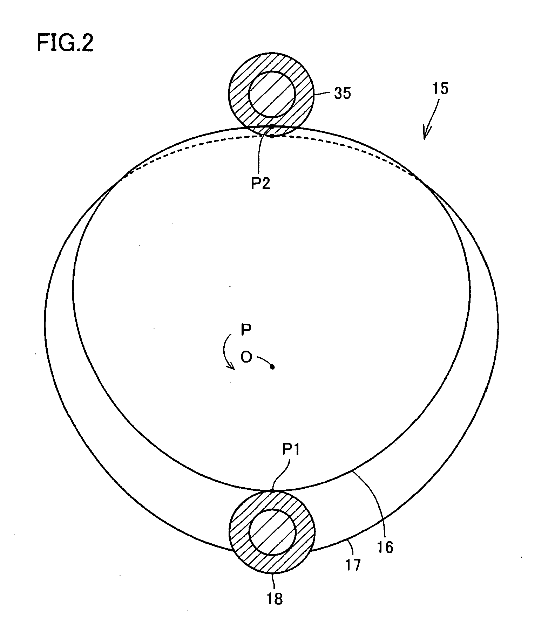

Fig. 2 is a plan view of cam member 15. As shown in Fig. 1 and Fig. 2, cam member 15 includes a cam portion 16 and a cam portion 17. Then, in the state shown in Fig. 2, punch rod 30 is retracted from a work, and piston rod 19 is displaced upward, as shown in Fig. 1.

Then, in Fig. 2, when rotation shaft 12 rotates around a rotation center line O and can member 15 rotates, roller member 18 is gradually displaced downward. In other words, when rotation shaft 12 starts rotation, roller member 18 is in contact at a position P1 which is the closest from rotation center line O of rotation shaft 12, of the circumferential surface of cam portion 16.

Then, as cam member 15 rotates, the distance between a contact point at which roller member 18 is in contact with cam portion 16 and rotation center line O increases.

Therefore, in Fig. 1, piston rod 19 is also displaced gradually downward. Then, in Fig. 1, the downward displacement of piston rod 19 allows the lower end portion (42) of piston rod 19 to enter pressurization chamber 21 so that oil in pressurization chamber 21 starts being pressurized.

Then, the oil is supplied to punch cylinder 14 through connection tube 27 so that punch rod 30 starts moving.

Furthermore, in Fig. 2, when rotation shaft 12 rotates, the contact point between roller member 18 and the outer circumferential surface of cam portion 16 comes closer to a position P2 which is the most distant from rotation center line O, of the outer circumferential surface of cam portion 16.

Here, the radius of curvature of the circumferential surface of cam portion 16 is formed to increase from position P1 to position P2. Then, the changing rate of radius of curvature in proximity to position P2 is smaller than the changing rate of radius of curvature in proximity to position P1. In other words, the distance between the circumferential surface of cam portion 16 and rotation center line O is formed to increase from position P1 to position P2, and the changing rate in proximity to position P2 is formed to be smaller than the changing rate in proximity to position P1.

Therefore, in the process during which the contact position between roller member 18 and cam portion 16 starts moving from position P1 to position P2, the displacement speed of roller member 18 is increased, and as the contact position between roller member 18 and cam portion 16 comes closer to position P2, the displacement speed of roller member 18 is decreased.

In this manner, since the displacement amount of roller member 18 is reduced as the contact position between roller member 18 and cam portion 16 comes closer to position P2, can member 15 can be rotated reliably even in a state in which a large pressing force is exerted from roller member 18. Therefore, even when a large pressing force is exerted on roller member 18, such as when punch rod 30 performs punch processing on a work, cam member 15 can rotate thereby to displace roller member 18. Accordingly, punch rod 30 can machine a work reliably.

In this manner, the shape of cam portion 16 of cam member 15 allows the displacement speed to become higher when punch rod 30 approaches a work, and also allows a large driving force to be generated reliably when punch rod 30 machines a work.

Furthermore, the period during which this actuator 100 is driven is limited to the time when punch cylinder 14 is driven. This prevents power source 10 and power transmission mechanism 50 from being driven all the time and also eliminates the need for relieving oil into an oil tank or the like, thereby preventing useless energy and in addition improving the operation efficiency.

Moreover, the driving of punch rod 30 can be varied by varying the shape of cam member 15, thereby facilitating adaptation to a design change of products.

Then, since the liquid oil transmits the power from power source 10 to punch cylinder 14, the layout of punch cylinder 14 and power source 10 and power transmission mechanism 50 can be changed freely by changing an arrangement position of connection tube 27 as appropriate. This facilitates adaptation to a die change due to a design change of workpieces.

Here, in actuator 100 in accordance with the present embodiment, as shown in Fig. 1, an auxiliary power mechanism (auxiliary power source) 11 is provided which can add auxiliary power to cam member 15. As this auxiliary power mechanism 11, for example, a coil spring (elastic member) 38 as shown in Fig. 1 or a gas spring may be employed.

Auxiliary power mechanism 11 includes coil spring 38, a housing case 39 housing coil spring 38, a roller member 35 in abutment with a circumferential surface of cam portion 17 of cam member 15, and a support member 37 rotatably supporting roller member 35 and being biased toward cam member 15 by coil spring 38.

A shaft portion 35a of roller member 35 is inserted into a through hole formed in support member 37. Then, this roller member 35 is pressed against the circumferential surface of cam portion 17 by the biasing force from coil spring 38 via support member 37.

Then, in Fig. 2, cam member 15 pivots in a rotation direction P and when the contact position between roller member 18 and the circumferential surface of cam portion 16 is in the vicinity of position P2, the force component of the pressing force applied by roller member 35 to the circumferential surface of cam portion 17 presses the circumferential surface of cam portion 17 in rotation direction P.

In other words, when roller member 18 is in the vicinity of position P2 of cam portion 16, the pressing force of roller member 35 pressing the circumferential surface of cam portion 17 assists cam member 15 to rotate in rotation direction P.

Therefore, the powers from power source 10 and auxiliary power mechanism 11 are applied to roller member 18. Thus, for example, when a large driving force needs to be applied to punch rod 30 such as when punch rod 30 machines a work, it is possible to prevent the output from power source 10 from becoming excessively large.

This can reduce the maximum output required by power source 10 thereby reducing the size and costs of power source 10.

When punch rod 30 machines a work and thereafter retracts from the work, the contact position between roller member 18 and the circumferential surface of cam portion 16 passes through position P2 of cam portion 16 and is displaced toward position P1.

At that moment, the pressing force applied from roller member 35 to the circumferential surface of cam portion 17 may act to rotate cam member 15 in the direction opposite to rotation direction P. However, since the output from power source 10 is larger than the output from auxiliary power mechanism 11, cam member 15 rotates in rotation direction P.

Then, the contact position between roller member 18 and the circumferential surface of cam portion 16 is positioned at position P1, so that punch rod 30 returns to the initial position where it is retracted from the work.

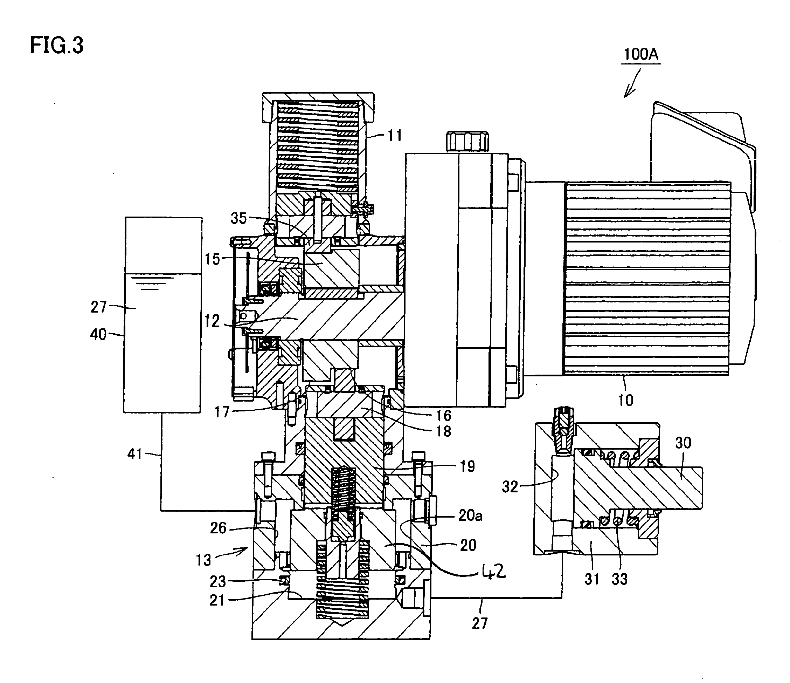

Fig. 3 is a side view, partially in section, showing a first modification of actuator 100 in accordance with the present embodiment. As shown in Fig. 3, in this actuator 100A, accommodation chamber 20a of cylinder portion 20 is filled with oil, and at the upper end of accommodation chamber 20a, a gas-liquid separation tank (separation mechanism) 40 separating gas in the oil is connected through a connection tube 41.

This gas-liquid separation tank 40 is arranged above cylinder portion 20, and in this gas-liquid separation tank 40, the level of oil is positioned and oil and the air (gas) are filled.

Here, in a state in which piston rod 19 is spaced apart from pressurization chamber 21 as shown in Fig. 3, pressurization chamber 21 and reservoir chamber 26 are in communication with each other. Furthermore, reservoir chamber 26 and gas-liquid separation tank 40 are in communication with each other through connection tube 41 connected to reservoir chamber 26, so that pressurization chamber 21, reservoir chamber 26, and gas-liquid separation tank 40 communicate with each other.

Therefore, gas such as the air entering pressurization chamber 21 is ejected to gas-liquid separation tank 40 through reservoir chamber 26 and connection tube 41.

Then, when the lower end portion (42) of piston rod 19 enters pressurization chamber 21 and reaches seal member 23, an opening portion of pressurization chamber 21 is closed by piston rod 19, so that pressurization chamber 21 is separated from reservoir chamber 26. Then, piston rod 19 further enters pressurization chamber 21, whereby the oil in pressurization chamber 21 is pressurized. At this moment, the air in pressurization chamber 21 has already been ejected to gas-liquid separation tank 40, so that piston rod 19 can pressurize the oil well to allow power to be transmitted well to punch rod 30.

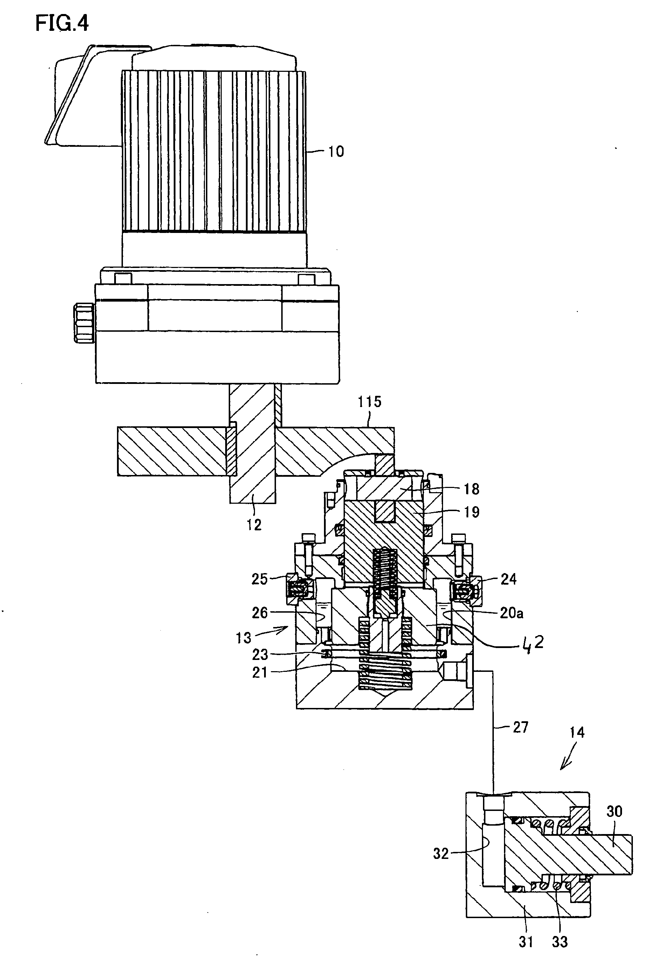

Fig. 4 is a schematic view showing a second embodiment of the actuator in accordance with the present embodiment. As in the example shown in Fig. 4, the power from power source 10 may be supplied to hydraulic pump 13 through an end cam (bell cam) 115.

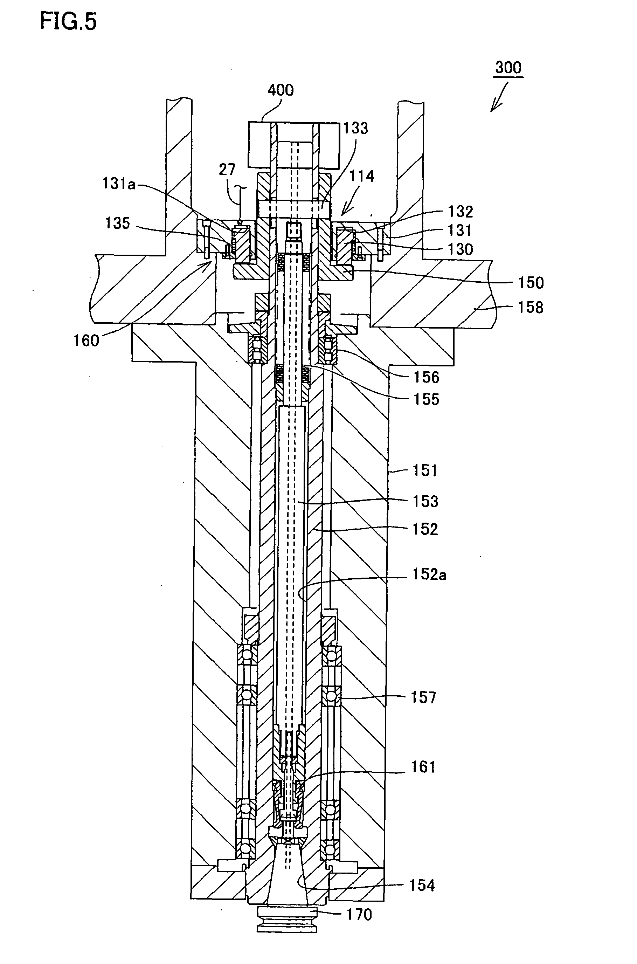

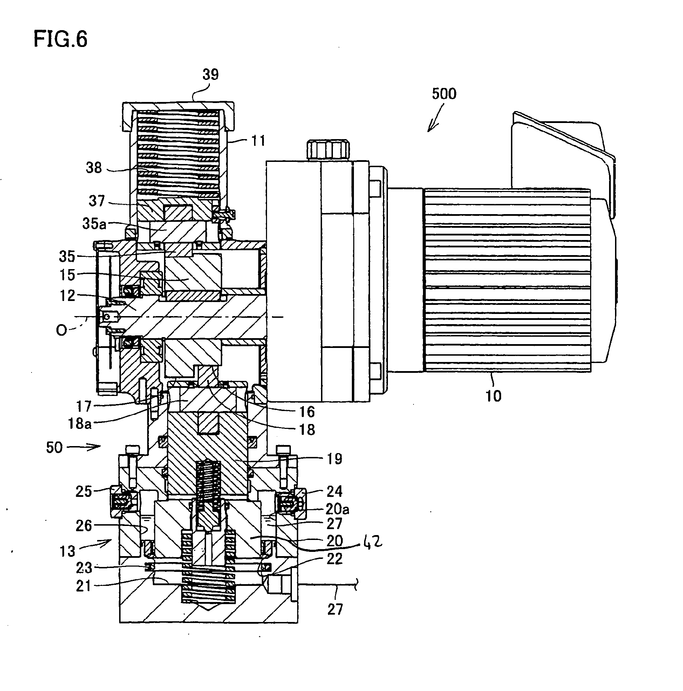

Fig. 5 is a cross-sectional view showing an example in which the actuator in accordance with the present embodiment is applied to an unclamp apparatus 300, and Fig. 6 is a cross-sectional view showing an actuator 500 supplying a driving force for an unclamp operation to unclamp apparatus 300 shown in Fig. 5.

In Fig. 5, unclamp apparatus 300 includes a casing 151, a main shaft 152 rotatably supported on casing 151, an attachment portion 154 provided at a lower end portion of main shaft 152 and having a tool 170 attached thereto, and a driving source 400 such as a motor rotating main shaft 152. Main shaft 152 rotates with tool 170 attached to attachment portion 154, whereby a not-shown work is machined. It is noted that main shaft 152 is rotatably supported by a plurality of bearings 156, 157.

Unclamp apparatus 300 further includes a drawbar 153 inserted in a through hole 152a formed in main shaft 152 to extend in the axial direction, an elastic member 155 such as a Belleville spring accommodated in through hole 152a to bias drawbar 153 in the direction away from attachment portion 154, an unclamp mechanism 114 capable of pressing drawbar 153 toward attachment portion 154, and a collet (grip portion) 161.

Collet 161 is accommodated in through hole 152a and is engaged with both of an upper end portion of tool 170 attached to attachment portion 154 and a lower end portion of drawbar 153. Then, when tool 170 is attached to attachment portion 154, drawbar 153 is biased upward by elastic member 155 and collet 161 is also biased upward.

Therefore, tool 170 is attracted toward main shaft 152 by collet 161, and tool 170 is fitted in attachment portion 154.

Then, unclamp apparatus 300 includes actuator 500 for bringing tool 170 attached (clamped) to attachment portion 154 into an unclamp state, as shown in Fig. 5 and Fig. 6.

This actuator 500 is structured similarly to the aforementioned actuator 100 shown in Fig. 1. Actuator 500 includes power source 10, unclamp mechanism 114 as an output portion shown in Fig. 5, and power transmission mechanism 50 transmitting power from power source 10 to unclamp mechanism 114.

Here, connection tube 27 through which oil circulates is connected between power transmission mechanism 50 and unclamp mechanism 114. Therefore, by changing a manner of routing connection tube 27, power source 10, power transmission mechanism 50, and the like can be arranged at a position distant from the unclamp apparatus body. In addition, the position of actuator 500 can be changed as necessary according to the installation condition of unclamp apparatus 300.

In Fig. 5, unclamp apparatus 114 includes an unclamp cylinder 160 driven by hydraulic pressure supplied from power transmission mechanism 50, a press member 150 pressed by a piston rod 130 of unclamp cylinder 160, and a pin 133 engaged with press member 150 and drawbar 153. In the clamp state, pin 133 is fixed to press member 150, inserted in a through hole formed around the circumferential surface of main shaft 152, and positioned above drawbar 153.

Unclamp cylinder 160 includes piston rod 130 being slid by hydraulic pressure supplied from power transmission mechanism 50, a cylinder portion 131 slidably supporting piston rod 130, and an oil accommodation chamber 132 defined in cylinder portion 131 and supplied with oil.

Then, in order to bring tool 170 into the unclamp state, first, in Fig. 6, power source 10 is actuated to rotate cam member 15.

Here, cam member 15 is formed in the shape as shown in Fig. 2 above, and in a state in which tool 170 is clamped, roller member 18 is in contact with the circumferential surface of cam portion 16 at position P1 of cam portion 16.

Then, cam member 15 rotates, and as the contact position between roller member 18 and the circumferential surface of cam portion 16 comes closer to position P2, the distance between rotation center line O and the contact position between roller member 18 and cam portion 16 increases.

Accordingly, piston rod 19 is displaced so that piston rod 19 reduces the capacity of accommodation chamber 20a.

Then, piston rod 19 enters pressurization chamber 21 whereby oil is pressurized and then supplied to oil accommodation chamber 132 shown in Fig. 5. Thus, piston rod 130 is displaced toward tool 170 and press member 150 and pin 133 are also displaced toward tool 170. Pin 133 is displaced toward tool 170 thereby being brought into abutment with the upper end portion of drawbar 153 and pressing drawbar 153 toward tool 170.

Accordingly, drawbar 153 starts being displaced toward tool 170 against the biasing force from elastic member 155. Then, when drawbar 153 is displaced downward to a prescribed position, collet 161 is deformed and the engagement state between collet 161 and tool 170 is then released.

Then, in Fig. 2, when the contact position between roller member 18 and cam portion 16 reaches the proximity of position P2 and position P2, a large power from power transmission mechanism 50 is supplied to unclamp cylinder 160.

Then, a large driving force from power transmission mechanism 50 is transmitted to drawbar 153 through piston rod 130, press member 150, and pin 133. This ensures that tool 170 is removed from attachment portion 154. In this manner, the unclamp operation of a tool is finished. It is noted that auxiliary power mechanism 11 is also provided in the example shown in Fig. 6 in order to reduce the maximum output of power source 10.

It is noted that upon completion of the unclamp operation, the driving of power source 10 shown in Fig. 6 is stopped and a clutch mechanism in power source 10 disconnects power transmission to rotation shaft 12. Accordingly, the unclamp state of tool 170 is maintained. When the tool is unclamped in this manner and another tool is thereafter attached, a new tool 170 is inserted in attachment portion 154.

When the inserted tool 170 is thereafter clamped, power source 10 shown in Fig. 6 is actuated again and the clutch mechanism in power source 10 connects power transmission to rotation shaft 12.

Accordingly, cam member 15 starts rotating. At this moment, in Fig. 2, the contact position between roller member 18 and cam portion 16 is displaced from position P2 toward position P1.

Therefore, the distance between the contact position between roller member 18 and cam portion 16 and rotation center line O is decreased. Accordingly, in Fig. 6, piston rod 19 is displaced upward so that hydraulic pressure is reduced and in addition the oil starts returning into accommodation chamber 20a of cylinder portion 20.

Then, in Fig. 5, piston rod 130 is also displaced to reduce the capacity of oil accommodation chamber 132 and starts being displaced in the direction away from attachment portion 154.

When the driving force applied from unclamp mechanism 114 to drawbar 153 is reduced in this manner, drawbar 153 starts being displaced upward by the biasing force from elastic member 155.

As drawbar 153 is displaced upward, collet 161 provided at the lower end portion of drawbar 153 is also displaced apart from attachment portion 154.

As collet 161 is displaced in this manner, the end portion of collet 161, which has been deformed to be opened, is deformed to be closed to come into engagement with the upper end portion of tool 170.

Then, drawbar 153 is further displaced upward, so that collet 161 engaged with the lower end portion of drawbar 153 and tool 170 engaged with collet 161 are also displaced upward.

In this manner, new tool 170 is attached to attachment portion 154.

Although the embodiment of the present invention has been described above, it should be understood that the embodiment disclosed herein is illustrative rather than limitative in all respects. The scope of the present invention is shown in the claims, and it is intended that all the modifications within the claims should be embraced.

### INDUSTRIAL APPLICABILITY

The present invention is suitable for an actuator, an unclamp apparatus having an actuator, and a machining apparatus.

## Claims

1. An actuator (100) comprising:
a driving source (10);
a cam (15, 115) driven by power from said driving source (10);
a following member (19) moving in connection with a motion of said cam;
an accommodation chamber (20a) accommodating an actuating medium; and
an output portion (14) outputting the power transmitted to said actuating medium by said following member (19), **characterized in that**
said accommodation chamber (20a) includes a pressurization chamber (21) filled with said actuating medium and a reservoir chamber (26) positioned above said pressurization chamber (21),
as a lower end portion (42) of said following member (19) moves toward said pressurization chamber (21) from a position inside said reservoir chamber (26) spaced apart from said pressurization chamber (21), and
upon said lower end portion (42) of said following member (19) entering said pressurization chamber (21), said pressurization chamber (21) and said reservoir chamber (26) are separated from each other and said actuating medium within said pressurization chamber (21) is pressurized, and
as said lower end portion (42) of said following member (19) is spaced apart from said pressurization chamber (21), said pressurization chamber (21) and said reservoir chamber (26) are in communication with each other.

2. The actuator (100) according to claim 1, further comprising a connection portion (27) connected with said accommodation chamber (20a) and said output portion (14).

3. The actuator (100) according to claim 1 or 2, wherein said actuating medium is a liquid actuating medium, and the actuator further comprises a separation mechanism (40) connected to said output portion (14) to be able to separate gas in said actuating medium.

4. The actuator (100) according to one of the preceding claims, further comprising an auxiliary power source (11) capable of applying auxiliary power to said cam (15, 115).

5. The actuator (100) according to claims 1, 2 or 4, further comprising a valve (24, 25) supplying outside air into said accommodation chamber (20a) and ejecting gas in said accommodation chamber (20a).

6. An unclamp apparatus comprising the actuator (100) according to one of the preceding claims.

7. A machining apparatus comprising the actuator (100) according to one of the preceding claims.

## Patentansprüche

1. Ein Aktuator (100) der aufweist:
eine Antriebsquelle (10);
einen Kurventräger (15, 115), der durch Energie von einer Antriebsquelle (10) angetrieben wird;
ein Folgebauteil (19), das sich in Verbindung mit einer Bewegung des Kurventrägers bewegt;
eine Aufnahmekammer (20a), die ein Betätigungsmedium aufnimmt; und
einen Ausgabeabschnitt (14), der die Energie, die durch das Folgebauteil (19) auf das Betätigungsmedium übertragen wird, ausgibt, **dadurch gekennzeichnet, dass**
die Aufnahmekammer (20a) eine Druckbeaufschlagungskammer (21), die mit dem Betätigungsmedium gefüllt ist, und eine Reservoirkammer (26), die über der Druckbeaufschlagungskammer (21) angeordnet ist, enthält,
wenn sich ein unterer Endabschnitt (42) des Folgebauteils (19) zu der Druckbeaufschlagungskammer (21) von einer Position innerhalb der Reservoirkammer (26), die von der Druckbeaufschlagungskammer (21) beabstandet ist, bewegt, und wobei
beim Eintreten des unteren Endabschnitts (42) des Folgebauteils (19) in die Druckbeaufschlagungskammer (21) die Druckbeaufschlagungskammer (21) und die Reservoirkammer (26) voneinander separiert sind und das Betätigungsmedium innerhalb der Druckbeaufschlagungskammer (21) mit Druck beaufschlagt wird und
die Druckbeaufschlagungskammer (21) und die Reservoirkammer (26) miteinander in Verbindung sind, wenn der untere Endabschnitt (42) des Folgebauteils (19) von der Druckbeaufschlagungskammer (21) beabstandet ist.

2. Aktuator (100) gemäß Anspruch 1, der des Weiteren einen Verbindungsabschnitt (27) aufweist, der mit der Aufnahmekammer (20a) und dem Ausgabeabschnitt (14) verbunden ist.

3. Aktuator (100) gemäß Anspruch 1 oder 2, wobei das Betätigungsmedium ein flüssiges Betätigungsmedium ist und der Aktuator weiterhin einen Separiermechanismus (40) aufweist, der mit dem Ausgabeabschnitt (14) verbunden ist, um in der Lage zu sein, Gas in dem Betätigungsmedium abzutrennen.

4. Aktuator (100) gemäß einem der vorhergehenden Ansprüche, der weiterhin eine Hilfsenergieversorgung (11) aufweist, die in der Lage ist, den Kurventräger (15, 115) mit Hilfsenergie zu versorgen.

5. Aktuator (100) gemäß den Ansprüchen 1, 2 oder 4, der weiterhin ein Ventil (24, 25) aufweist, das Außenluft in die Aufnahmekammer (20a) liefert und Gas in der Aufnahmekammer (20a) ausstößt.

6. Eine Abspannvorrichtung, die den Aktuator (100) gemäß einem der vorhergehenden Ansprüche aufweist.

7. Eine Bearbeitungsvorrichtung, die den Aktuator (100) gemäß einem der vorhergehenden Ansprüche aufweist.

## Revendications

1. Actionneur (100) comprenant :
une source d'entraînement (10) ;
une came (15, 115) entraînée par la puissance provenant de ladite source d'entraînement (10) ;
un élément poussoir (19) se déplaçant conjointement avec un mouvement de ladite came ;
une chambre de logement (20a) logeant un milieu d'actionnement ; et
une partie de sortie (14) produisant la puissance transmise audit milieu d'actionnement par ledit élément poussoir (19), **caractérisé en ce que** :
ladite chambre de logement (20a) comprend une chambre de mise sous pression (21) remplie avec ledit milieu d'actionnement et une chambre de réservoir (26) positionnée au-dessus de ladite chambre de mise sous pression (21),
lorsqu'une partie d'extrémité inférieure (42) dudit élément poussoir (19) se déplace vers ladite chambre de mise sous pression (21) à partir d'une position à l'intérieur de ladite chambre de réservoir (26) éloignée de ladite chambre de mise sous pression (21), et
après que ladite partie d'extrémité inférieure (42) dudit élément poussoir (19) soit entrée dans ladite chambre de mise sous pression (21), ladite chambre de mise sous pression (21) et ladite chambre de réservoir (26) sont séparées l'une de l'autre et ledit milieu d'actionnement à l'intérieur de ladite chambre de mise sous pression (21) est mis sous pression, et
lorsque ladite partie d'extrémité inférieure (42) dudit élément poussoir (19) est espacée de ladite chambre de mise sous pression (21), ladite chambre de mise sous pression (21) et ladite chambre de réservoir (26) sont en communication entre elles.

2. Actionneur (100) selon la revendication 1, comprenant en outre une partie de raccordement (27) raccordée avec ladite chambre de logement (20a) et ladite partie de sortie (14).

3. Actionneur (100) selon la revendication 1 ou 2, dans lequel ledit milieu d'actionnement est un milieu d'actionnement liquide et l'actionneur comprend en outre un mécanisme de séparation (40) raccordé à ladite partie de sortie (14) pour pouvoir séparer le gaz dans ledit milieu d'actionnement.

4. Actionneur (100) selon l'une quelconque des revendications précédentes, comprenant en outre une source de puissance auxiliaire (11) pouvant appliquer une puissance auxiliaire sur ladite came (15, 115).

5. Actionneur (100) selon les revendications 1, 2 ou 4, comprenant en outre une soupape (24, 25) alimentant ladite chambre de logement (20a) en air extérieur et éjectant le gaz dans ladite chambre de logement (20a).

6. Appareil de desserrage comprenant l'actionneur (100) selon l'une quelconque des revendications précédentes.

7. Appareil d'usinage comprenant l'actionneur (100) selon l'une quelconque des revendications précédentes.
